# EUROPÄISCHE PATENTANMELDUNG

(11) **EP 2 199 073 A2**
(43) Veröffentlichungstag der Anmeldung: **23.06.2010**
(21) Anmeldenummer: 09014484.1
(22) Anmeldetag: 20.11.2009
(51) Int. Cl.: B32B 1/08, B32B 27/30

(54) **Kraftfahrzeug-Fluidleitung**

(30) Priorität: 19.12.2008 DE 102008063960
(71) Anmelder: NORMA Germany GmbH, 63477 Maintal (DE)
(72) Erfinder: Sebö, Peter, 60488 Frankfurt/Main (DE); Kertesz, Janos, 65843 Sulzbach (DE)
(74) Vertreter: Knoblauch, Andreas

(57) **Zusammenfassung**

Es wird eine Kraftfahrzeug-Fluidleitung für Kühlwasser, Öl oder Blow-by-Gase angegeben mit einem Rohr, das einen Innenraum umgibt.

Man möchte einen Ersatz für bisher verwendete Gummileitungen zur Verfügung stellen.

Hierzu ist vorgesehen, dass das Rohr ein syndiotactisches Polystyrol (7) in Kombination mit mindestens einem weiteren Kunststoff (8, 10) aufweist.

## Beschreibung

Die Erfindung betrifft eine Kraftfahrzeug-Fluidleitung für Kühlwasser, Öl oder Blow-by-Gase mit einem Rohr, das einen Innenraum umgibt.

Die Erfindung wird im Folgenden anhand einer Kühlwasserleitung beschrieben, wie sie beispielsweise verwendet wird, um Kühlwasser in einem Kreislauf zirkulieren zu lassen, der einen Motor und einen Wärmetauscher umfasst. Um einen Frostschutz zu gewährleisten, enthält das Kühlwasser in der Regel Glykol. Für die Fluidleitung muss man also einen Werkstoff verwenden, der gegen das Glykol und andere Bestandteile des Kühlwassers beständig ist. In dem Kühlwasserkreislauf herrscht im Betrieb des Motors eine erhöhte Temperatur, die in der Regel über 100°C beträgt. Um diese hohe Temperatur zu erzielen, ohne dass das Kühlwasser verdampft, ist ein entsprechend großer Druck erforderlich. Die Kühlwasserleitung muss also zusätzlich in ausreichendem Maße gegen Temperatur und Druck beständig sein.

Das Gleiche gilt in entsprechendem Maße, wenn die Fluidleitung für andere Fluide verwendet wird, beispielsweise Öl, wie Motoröl oder Getriebeöl, oder Blow-by-Gase. Auch in diesem Fall ist eine Beständigkeit gegenüber erhöhter Temperatur und erhöhtem Druck erforderlich.

Man verwendet daher für eine Kühlwasserleitung in der Regel Rohre oder Schläuche aus einem Gummimaterial. Dieses Gummimaterial weist zwar die geforderte Beständigkeit gegenüber der erhöhten Temperatur und dem erhöhten Druck sowie eine Beständigkeit gegenüber den Bestandteilen des Kühlwassers auf. Derartige Kühlwasserschläuche sind aber relativ aufwendig in der Herstellung und damit teuer. Darüber hinaus ist man bei der Formgebung gewissen Restriktionen unterworfen.

Der Erfindung liegt die Aufgabe zugrunde, einen Ersatz für eine Gummileitung zur Verfügung zu stellen.

Diese Aufgabe wird bei einer Kraftfahrzeug-Fluidleitung der eingangs genannten Art dadurch gelöst, dass das Rohr ein syndiotactisches Polystyrol in Kombination mit mindestens einem weiteren Kunststoff aufweist.

Mit einer derartigen Leitung erhält man bei einer relativ freien Formgebung und günstigen Gestehungskosten ein Rohr, das ausreichend gegen erhöhten Druck und erhöhter Temperatur beständig ist. Dadurch, dass man das syndiotactische Polystyrol mit mindestens einem weiteren Kunststoff kombiniert, ist man nicht mehr darauf angewiesen, dass das syndiotactische Polystyrol alleine sämtliche Forderungen erfüllt, die für eine entsprechende Fluidleitung aufgestellt worden sind. Vielmehr kann man durch die Wahl geeigneter Kunststoffe das Rohr entsprechend modifizieren. Insbesondere kann man die Schlagzähigkeit verbessern und/oder die Wärmealterungsbeständigkeit erhöhen. Polystyrol im Allgemeinen ist für eine derartige Fluidleitung eher ungeeignet. Erst wenn es als syndiotactisches Polystyrol in kristalliner Form vorliegt, ergibt sich in überraschender Weise die vorzügliche Eignung.

Vorzugsweise bilden das syndiotactische Polystyrol und der weitere Kunststoff einen schichtartigen Aufbau. Mit einer Schichtung der verwendeten Werkstoffe ist es einerseits relativ einfach, das syndiotactische Polystyrol mit anderen Kunststoffen zu kombinieren. Zum Anderen lässt sich auf diese Weise der weitere Kunststoff oder die weiteren Kunststoffe genau dort einsetzen, wo sie notwendig oder sinnvoll sind.

Vorzugsweise ist das Rohr als koextrudiertes Element aus syndiotactischem Polystyrol und dem weiteren Kunststoff gebildet. Die Koextrusion erlaubt es auf einfache Weise, das syndiotactische Polystyrol und den oder die weiteren Kunststoffe miteinander zu kombinieren.

Bevorzugterweise weisen das syndiotactische Polystyrol und der weitere Kunststoff einen Haftvermittler auf. Der Haftvermittler sorgt dann dafür, dass das syndiotactische Polystyrol und der weitere Kunststoff eine dauerhafte mechanische Verbindung miteinander eingehen, die auch über einen längeren Zeitraum eine ausreichende mechanische Stabilität gewährleistet.

In einer alternativen Ausgestaltung kann man vorsehen, dass das syndiotactische Polystyrol und der weitere Kunststoff direkt aneinander haften. In diesem Fall kann es sinnvoll und notwendig sein, das syndiotactische Polystyrol so zu modifizieren, dass man eine direkte Haftung erhält.

Vorzugsweise ist der weitere Kunststoff ein thermoplastischer Elastomer, insbesondere auf Polyolefin- oder Polyester-Basis. Damit stehen in ausreichender Zahl Werkstoffe zur Verfügung, die man mit dem syndiotactischen Polystyrol kombinieren kann. Thermoplastische Elastomere lassen sich leicht in eine gewünschte Form bringen. Sie bewirken, dass die Fluidleitung eine gute Schlagzähigkeit aufweist.

Vorzugsweise ist der weitere Kunststoff ausgewählt aus einer Gruppe, die PPE, TPE, PA, EVA, PPS, PP, PBT und PET aufweist. PPE (Polyphenylenether), TPE (Thermoplastisches Elastomer), PA (Polyamid), EVA (Ethylenvinylacetat), PPS (Polyphenylensulfid), PP (Polypropylen), PBT (Polybutylenterephthalat) und PET (Polyethylenterephthalat) sind Werkstoffe, die sich mit vertretbarem Aufwand gemeinsam mit dem syndiotactischen Polystyrol formen lassen. Durch die Wahl eines oder mehrerer Werkstoffe aus der Gruppe zum Aufbau der Leitung lassen sich gezielt bestimmte mechanische Eigenschaften einstellen. So kann man beispielsweise mit TPE und EVA die Schlagzähigkeit verbessern. Die übrigen der genannten Kunststoffe ergeben eine verbesserte Wärmealterungsbeständigkeit, Zugfestigkeit und/oder E-Modul.

Vorzugsweise ist das syndiotactische Polystyrol an einer den Innenraum begrenzenden Innenwand angeordnet. In diesem Fall steht das syndiotactische Polystyrol mit dem durchströmenden Fluid, beispielsweise Kühlwasser, Öl oder Blow-by-Gase, unmittelbar in Verbindung. Eine derartige Ausgestaltung ist immer dann möglich, wenn das syndiotactische Polystyrol mit dem Fluid verträglich ist. Insbesondere bei einem Wasser-Glykol-Gemisch ist eine Innenwand mit syndiotactischem Polystyrol von Vorteil. Es ergibt sich dann eine hohe Dimensionsstabilität.

In einer alternativen Ausgestaltung kann vorgesehen sein, dass das syndiotactische Polystyrol innerhalb einer Sandwich-Struktur aus mehreren Schichten angeordnet ist. In diesem Fall ist das syndiotactische Polystyrol nach innen und ggf. auch nach außen von anderen Kunststoffen abgedeckt, so dass man lediglich dafür sorgen muss, dass der andere Kunststoff an der Innenseite mit dem durchströmenden Fluid verträglich ist. Das syndiotactische Polystyrol kann dann mechanische Aufgaben übernehmen und die Fluidleitung gegen Temperatur und Druck beständig machen.

Hierbei ist bevorzugt, dass das syndiotactische Polystyrol die zweite Schicht von innen bildet. In diesem Fall kann das syndiotactische Polystyrol seine Wirkung am Besten entfalten. Lediglich die innere Schicht, die mit dem durchströmenden Fluid Kontakt hat, muss gegenüber dem durchströmenden Fluid beständig sein. Die Hauptaufgabe der Leitung, das Fluid auch bei höheren Temperaturen und höherem Druck zu führen, wird dann durch die aus syndiotactischem Polystyrol gebildete Schicht wahrgenommen.

Hierbei ist bevorzugt, dass die innere Schicht PPS (Polyphenylensulfid), TPE (Thermoplastisches Elastomer) und/oder PPE (Polyphenylenether) aufweist. Polyphenylensulfid hat zwar gegenüber dem syndiotactischen Polystyrol eine verringerte mechanische Festigkeit und ist in der Regel auch etwas teurer. Dafür ist es gegenüber mehr Fluiden beständig als das syndiotactische Polystyrol. Als TPE kommen beispielsweise PP/EPDM (Polypropylen-Ethylenpropylendienterpolymere), SBS (Styrol/Butadien/Styrol-Triblockcopolymere) oder SEBS (Styrol/Ethylen/Butadien/Styrol) in Betracht.

Vorzugsweise ist das syndiotactische Polystyrol mit Fasern verstärkt. Als Fasern kommen beispielsweise Glas- oder Kohlefasern in Betracht. Diese Fasern dienen weiter dazu, die mechanische Festigkeit des syndiotactischen Polystyrols zu erhöhen.

Auch ist von Vorteil, wenn mindestens ein Kunststoff ein säuremodifizierter funktionalisierter Kunststoff ist. Der Kunststoff kann auch das syndiotactische Polystyrol sein. Dieser Kunststoff verbindet sich dann besser mit dem benachbarten Kunststoff. Er wird polarer.

Die Erfindung wird im Folgenden anhand von bevorzugten Ausführungsbeispielen in Verbindung mit der Zeichnung beschrieben. Hierin zeigen:
- Fig. 1: eine schematische Darstellung einer Fluidleitung,
- Fig. 2: einen Schnitt II-II nach Fig. 1 und
- Fig. 3: eine Abwandlung gegenüber Fig. 2.

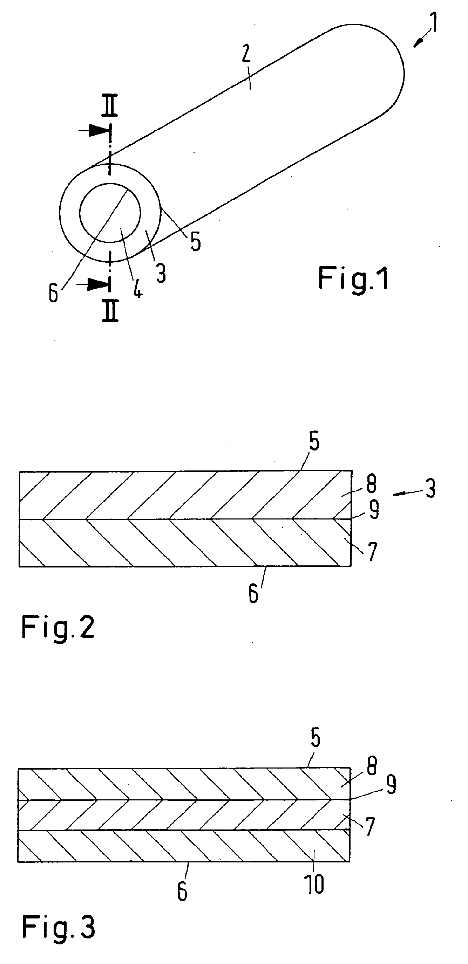

Fig. 1 zeigt eine Kraftfahrzeug-Fluidleitung 1 für Kühlwasser, Öl oder Blow-by-Gase mit einem Rohr 2, das eine Wand 3 aufweist, die einen Innenraum 4 umgibt. Das Rohr 2 weist eine Außenseite 5 und eine Innenseite 6 auf.

Die Wand 3 des Rohres 2 ist mehrschichtig ausgebildet, wie dies aus den Fig. 2 und 3 hervorgeht.

Nach einem ersten Ausführungsbeispiel, das in Fig. 2 dargestellt ist, weist die Wand 3 an der Innenseite 6 des Rohres 2 eine Schicht 7 aus syndiotactischem Polystyrol (SPS) auf. Diese Schicht 7 ist an ihrer Außenseite mit einer zweiten Schicht 8 aus einem weiteren Kunststoff abgedeckt. Zwischen den beiden Schichten 7, 8 kann ein Haftvermittler 9 angeordnet sein. Man kann aber auch so vorgehen, dass man das syndiotactische Polystyrol so modifiziert, dass der weitere Kunststoff der zweiten Schicht 8 unmittelbar oder direkt haftet. So kann das syndiotactische Polystyrol beispielsweise säuremodifiziert funktionalisieren.

Der weitere Kunststoff ist vorzugsweise ein thermoplastischer Elastomer, insbesondere auf Polyolefin- oder Polyester-Basis. Vorzugsweise ist der weitere Kunststoff der zweiten Schicht 8 ausgewählt aus einer Gruppe, die PPE (Polyphenylenether), TPE (Thermoplastisches Elastomer), PA (Polyamid), EVA (Ethylenvinylacetat), PPS (Polyphenylensulfid), PP (Polypropylen), PBT (Polybutylenterephthalat) und PET (Polyethylenterephthalat) aufweist.

Die beiden Schichten 7, 8 können zusammen durch Koextrusion gebildet werden. Das syndiotactische Polystyrol der ersten Schicht 7 ist dabei in weiten Grenzen gegen erhöhte Temperatur und erhöhten Druck beständig. Das syndiotactische Polystyrol der ersten Schicht 7 trägt also in einem hohen Maße zur mechanischen Stabilität der Leitung 1 im Betrieb bei. Der weitere Kunststoff der zweiten Schicht 8 kann dann für andere Zwecke verwendet werden, beispielsweise um eine gute Schlagfestigkeit oder Befestigbarkeit der Leitung 1 zu gewährleisten. Der andere Kunststoff kann alternativ oder zusätzlich zum syndiotactischen Polystyrol funktionalisiert sein, um eine bessere Haftung zu erreichen, beispielsweise säuremodifiziert.

Fig. 3 zeigt eine abgewandelte Ausgestaltung, bei der gleiche Elemente mit den gleichen Bezugszeichen versehen sind. Die Schicht 7 aus dem syndiotactischen Polystyrol ist nun in einer Sandwich-Struktur aus mehreren Schichten angeordnet und bildet von der Innenseite 6 aus gesehen die zweite Schicht. Unmittelbar an der Innenseite 6 ist eine dritte Schicht angeordnet, die ebenfalls aus einem der oben angegebenen Kunststoffe gebildet sein kann. Vorzugsweise ist diese Schicht jedoch aus PPS (Polyphenylensulfid) gebildet.

Die erste Schicht 7 aus syndiotactischem Polystyrol kann mit Fasern verstärkt sein, beispielsweise mit Glas- oder Kohlefasern. Auch die anderen beiden Schichten 8, 10 können selbstverständlich mit Fasern verstärkt sein.

Beide Ausführungsformen sind so ausgebildet, dass sie bei einer Temperatur von 135°C über einen Zeitraum von 700 Stunden in einem Wasser-Glykol-Gemisch bestehen und dann eine Kälteschlagprüfung nach Charpy (Schlagzähigkeit) aushalten.

## Patentansprüche

1. Kraftfahrzeug-Fluidleitung für Kühlwasser, Öl oder Blow-by-Gase mit einem Rohr (1), das einen Innenraum (4) umgibt, **dadurch gekennzeichnet, dass** das Rohr (1) ein syndiotactisches Polystyrol (7) in Kombination mit mindestens einem weiteren Kunststoff (8, 10) aufweist.

2. Fluidleitung nach Anspruch 1, **dadurch gekennzeichnet, dass** das syndiotactische Polystyrol (7) und der weitere Kunststoff (8, 10) einen schichtartigen Aufbau bilden.

3. Fluidleitung nach Anspruch 1 oder 2, **dadurch gekennzeichnet, dass** das Rohr (1) als koextrudiertes Element aus syndiotactischem Polystyrol (7) und dem weiteren Kunststoff (8, 10) gebildet ist.

4. Fluidleitung nach einem der Ansprüche 1 bis 3, **dadurch gekennzeichnet, dass** das syndiotactische Polystyrol (7) und der weitere Kunststoff (8) einen Haftvermittler (9) aufweisen.

5. Fluidleitung nach einem der Ansprüche 1 bis 4, **dadurch gekennzeichnet, dass** das syndiotactische Polystyrol (7) und der weitere Kunststoff (10) direkt aneinander haften.

6. Fluidleitung nach einem der Ansprüche 1 bis 5, **dadurch gekennzeichnet, dass** der weitere Kunststoff (8, 10) ein thermoplastischer Elastomer, insbesondere auf Polyolefin- oder Polyester-Basis, ist.

7. Fluidleitung nach einem der Ansprüche 1 bis 6, **dadurch gekennzeichnet, dass** der weitere Kunststoff (8, 10) ausgewählt ist aus einer Gruppe, die PPE, TPE, PA, EVA, PPS, PP, PBT und PET aufweist.

8. Fluidleitung nach einem der Ansprüche 1 bis 7, **dadurch gekennzeichnet, dass** das syndiotactische Polystyrol (7) an einer den Innenraum (4) begrenzenden Innenwand (6) angeordnet ist.

9. Fluidleitung nach einem der Ansprüche 1 bis 7, **dadurch gekennzeichnet, dass** das syndiotactische Polystyrol (7) innerhalb einer Sandwich-Struktur aus mehreren Schichten (7, 8, 10) angeordnet ist.

10. Fluidleitung nach Anspruch 9, **dadurch gekennzeichnet, dass** das syndiotactische Polystyrol (7) die zweite Schicht von innen bildet.

11. Fluidleitung nach Anspruch 10, **dadurch gekennzeichnet, dass** die innere Schicht (10) PPS, TPE und/oder PPE aufweist.

12. Fluidleitung nach einem der Ansprüche 1 bis 11, **dadurch gekennzeichnet, dass** das syndiotactische Polystyrol (7) mit Fasern verstärkt ist.

13. Fluidleitung nach einem der Ansprüche 1 bis 12, **dadurch gekennzeichnet, dass** mindestens ein Kunststoff ein säuremodifizierter funktionalisierter Kunststoff ist.
